# EUROPEAN PATENT SPECIFICATION

(11) **EP 0 770 113 B1**
(45) Date of publication and mention of the grant of the patent: **21.04.1999**
(21) Application number: 95923512.8
(22) Date of filing: 06.07.1995
(51) Int. Cl.: C09K 5/04

(54) **REFRIGERANT COMPOSITIONS**
KÜHLZUSAMMENSETZUNGEN
COMPOSITIONS REFRIGERANTES

(30) Priority: 13.07.1994 GB 9414133
(43) Date of publication of application: 02.05.1997
(73) Proprietor: IMPERIAL CHEMICAL INDUSTRIES PLC, London SW1P 3JF (GB)
(72) Inventor: POWELL, Richard, Llewellyn, Tarporley Cheshire CW6 9NV (GB); CORR, Stuart, Warrington Cheshire WA4 5DH (GB); MURPHY, Frederick, Thomas, Cheshire WA9 7RY (GB); MORRISON, James, David, Northwich Cheshire CW8 2QN (GB)
(74) Representative: Dee, Ian Mark
(86) International application number: GB9501596
(87) International publication number: WO9602606

(56) References cited:
- EP-A- 0 299 614
- WO-A-93/14174
- WO-A-94/17153
- DE-A- 4 116 274
- US-A- 5 340 490

## Description

The present invention relates to non-azeotropic refrigerant compositions and more particularly to non-azeotropic refrigerant compositions which can be used in the air conditioning and low temperature refrigeration applications currently satisfied by chlorodifluoromethane (refrigerant R-22) and the azeotropic mixture of chlorodifluoromethane and chloropentafluoroethane (refrigerant R-115); the azeotrope being refrigerant R-502.

Heat transfer devices of the mechanical compression type such as refrigerators, freezers, heat pumps and air conditioning systems are well known. In such devices a refrigerant liquid of a suitable boiling point evaporates at low pressure taking heat from a surrounding heat transfer fluid. The resulting vapour is then compressed and passes to a condenser where it condenses and gives off heat to another heat transfer fluid. The condensate is then returned through an expansion valve to the evaporator so completing the cycle. The mechanical energy required for compressing the vapour and pumping the liquid may be provided by an electric motor or an internal combustion engine.

In addition to having a suitable boiling point and a high latent heat of vaporisation, the properties preferred of a refrigerant include low toxicity, non-flammability, non-corrosivity, high stability and freedom from objectionable odour.

Hitherto, heat transfer devices have tended to use fully and partially halogenated chlorofluorocarbon refrigerants such as trichlorofluoromethane (refrigerant R-11), dichlorodifluoromethane (refrigerant R-12), chlorodifluoromethane (refrigerant R-22) and the azeotropic mixture of chlorodifluoromethane and chloropentafluoroethane (refrigerant R-115); the azeotrope being refrigerant R-502. In particular, refrigerant R-22 has found widespread use in air conditioning systems while refrigerant R-502 has been widely used in low temperature refrigeration applications.

However, the fully and partially halogenated chlorofluorocarbons have been implicated in the destruction of the earth's protective ozone layer and as a result the use and production thereof has been limited by international agreement.

Whilst heat transfer devices of the type to which the present invention relates are essentially closed systems, loss of refrigerant to the atmosphere can occur due to leakage during operation of the equipment or during maintenance procedures. It is important, therefore, to replace fully and partially halogenated chlorofluorocarbon refrigerants by materials having low or zero ozone depletion potentials.

In addition to the possibility of ozone depletion, it has been suggested that significant concentrations of chlorofluorocarbon refrigerants in the atmosphere might contribute to global warming (the so-called greenhouse effect). It is desirable, therefore, to use refrigerants which have relatively short atmospheric lifetimes as a result of their ability to react with other atmospheric constituents such as hydroxyl radicals.

Replacements for some of the chlorofluorocarbon refrigerants presently in use have already been developed. These replacement refrigerants tend to comprise selected hydrofluoroalkanes, i.e. compounds which contain only carbon, hydrogen and fluorine atoms in their structure. Thus, refrigerant R-12 is generally being replaced by 1,1,1,2-tetrafluoroethane (R-134a).

Although suitable replacement refrigerants are available, there is always a need for new refrigerants having a low or zero ozone depletion potential that are capable of replacing the chlorofluorocarbon refrigerants presently in use such as R-22 and R-502. Furthermore, very real benefits could be realised by a new replacement refrigerant having a higher refrigeration capacity and/or a higher energy efficiency (coefficient of performance) than the replacement refrigerants known in the art. The development of a more energy efficient refrigerant is a particularly desirable objective since such a refrigerant could bring about a reduction in indirect global warming. One possible route to achieving such an increase in the energy efficiency of a heat transfer device is to employ a non-azeotropic refrigerant blend which boils over a reasonably wide temperature range.

The present invention provides a non-azeotropic refrigerant composition comprising a mixture of compounds having low or zero ozone depletion potentials which can be used in the air conditioning and low temperature refrigeration applications currently satisfied by refrigerants R-22 and R-502. The non-azeotropic refrigerant composition of the invention can boil over a wide temperature range making it possible to increase the energy efficiency (coefficient of performance) of the equipment in which the composition is used. It is also possible to adjust the temperature range over which the refrigerant composition of the invention boils, i.e. the so-called temperature glide, by appropriate selection of the components and the amounts thereof forming the composition and thereby tailor the composition to its intended application. In addition, the refrigerant composition of the invention can exhibit an advantageously high refrigeration capacity.

According to the present invention there is provided a non-azeotropic (zeotropic) refrigerant composition comprising:
(A) carbon dioxide (CO₂);
(B) at least one hydrofluorocarbon selected from the group consisting of 1,1,1,2-tetrafluoroethane (R-134a) and 1,1,2,2-tetrafluoroethane (R-134); and
(C) at least one hydrofluorocarbon selected from the group consisting of difluoromethane (R-32), 1,1,1-trifluoroethane (R-143a) and pentafluoroethane (R-125).

The zeotropic refrigerant composition of the invention comprises three separate components.

The first component (component (A)) is carbon dioxide (CO₂) which exhibits a low temperature refrigeration action subliming at around -78.5°C.

The second component (component (B)) comprises at least one hydrofluorocarbon selected from the group consisting of 1,1,1,2-tetrafluoroethane (R-134a) and 1,1,2,2-tetrafluoroethane (R-134) which have boiling points of around -26.5°C and -19.7°C respectively. It is apparent that the boiling points of both R-134a and R-134 are appreciably higher than the sublimation temperature of the CO₂ making up component (A) which means that the refrigerant composition of the invention is capable of boiling and condensing over a wide temperature range, i.e. it can exhibit a wide temperature glide in both the evaporator and condenser. Although component (B) may contain a mixture of R-134a and R-134, it will preferably contain just one of these compounds and more preferably will contain just R-134a.

The third component (component (C)) comprises at least one hydrofluorocarbon selected from the group consisting of difluoromethane (R-32), 1,1,1-trifluoroethane (R-143a) and pentafluoroethane (R-125) which have boiling points of around -51.6°C, -47.6°C and -48.5°C respectively. Component (C) may contain just one of the three specified hydrofluorocarbons or it may comprise a mixture, for example an azeotropic or azeotrope-like mixture, of any two or all three of these compounds. In a preferred embodiment, component (C) is selected from the group consisting of R-32, R-125 and mixtures thereof.

The amounts of the various components in the refrigerant composition may be varied within wide limits. However, a refrigerant composition which can boil/condense over a wide temperature range and thus provide a wide temperature glide in both the evaporator and condenser (a wide glide refrigerant composition) will preferably comprise from 2 to 25 % by weight, more preferably from 2 to 15 % by weight, of CO₂, from 15 to 96 % by weight, more preferably from 30 to 96 % by weight, of component (B) and from 2 to 60 % by weight, more preferably from 2 to 55 % by weight, of component (C).

A preferred wide glide refrigerant composition of the invention for replacing refrigerant R-22 is one comprising from 2 to 10 % by weight, more particularly from 5 to 10 % by weight, of CO₂, from 45 to 96 % by weight, more particularly from 55 to 93 % by weight, of R-134 and from 2 to 45 % by weight, more particularly from 2 to 35 % by weight, of component (C).

A particularly preferred wide glide refrigerant composition of the invention for replacing refrigerant R-22 is one comprising from 2 to 10 % by weight, more particularly from 5 to 10 % by weight, of CO₂ from 50 to 96 % by weight, more particularly from 60 to 93 % by weight, of R-134a and from 2 to 40 % by weight, more particularly from 2 to 30 % by weight, of component (C). An especially preferred wide glide refrigerant composition of this type is one comprising from 5 to 10 % by weight of CO₂, from 75 to 93 % by weight ofR-134a and from 2 to 15 % by weight of component (C).

A particularly preferred wide glide refrigerant composition of the invention for replacing refrigerant R-502 is one comprising from 5 to 15 % by weight, more particularly about 10 % by weight, CO₂, from 35 to 55 % by weight, more particularly from 45 to 55 % by weight, R-134a, and from 35 to 55 % by weight, more particularly from 35 to 45 % by weight, R-125. An especially preferred wide glide refrigerant composition of the invention for replacing R-502 is one comprising about 10 % by weight CO₂, about 50 % by weight R-134a, and about 40 % by weight R-125.

The single fluid refrigerants and azeotropic refrigerant blends which are used in conventional heat transfer devices boil at a constant temperature in the evaporator under constant pressure conditions, and so produce an essentially constant temperature profile across the evaporator. The temperature of the heat transfer fluid being cooled, which may be air or water for example, drops fairly rapidly on first contacting the cold surfaces provided by the refrigerant evaporating in the evaporator owing to the large difference in temperature between that fluid and the evaporating refrigerant. However, since the temperature of the heat transfer fluid is progressively reduced as it passes along the length of the evaporator, there is a progressive reduction in the temperature differential between the fluid and the evaporating refrigerant and a consequent reduction in the heat transfer or cooling rate.

In contrast, the refrigerant composition of the invention is a non-azeotropic (zeotropic) composition which can boil over a wide temperature range under constant pressure conditions so as to create a temperature glide in the evaporator which can be exploited to reduce the energy required to operate the heat transfer device, e.g. by making use of the Lorentz cycle. One technique for exploiting the temperature glide involves the use of a heat transfer device equipped with a counter current flow evaporator and/or condenser in which the refrigerant and the heat transfer fluid are caused to flow counter currently to each other. With such an arrangement, it is possible to minimise the temperature difference between the evaporating and condensing refrigerant whilst maintaining a sufficiently high temperature difference between the refrigerant and the external fluid(s) to cause the required heat transfer to take place.

The consequence of minimising the temperature difference between the evaporating and condensing refrigerant in the same system is that the pressure difference is also minimised. As a result, the overall energy efficiency of the system is improved as less energy is consumed to bring about the refrigerant pressure rise from evaporator to condenser conditions.

Another potential use for the refrigerant composition of the invention is as a high capacity replacement for refrigerants R-22 and R-502. A preferred refrigerant composition of the invention in terms of its suitability as a high capacity replacement for refrigerant R-22 or refrigerant R-502 is one comprising from 1 to 20 % by weight of CO₂, from 5 to 60 % by weight of component (B) and from 30 to 90 % by weight of component (C). Component (B) is preferably R-134a and component (C) is preferably a mixture of R-32 and R-125.

A particularly preferred refrigerant composition of the invention in terms of its suitability as a high capacity replacement for refrigerant R-22 is one comprising from 1 to 15 % by weight, more particularly from 1 to 10 % by weight, of CO₂, from 30 to 55 % by weight, more particularly from 45 to 55 % by weight, of R-134a, from 15 to 30 % by weight, more particularly from 18 to 30 % by weight, of R-32 and from 20 to 45 % by weight, more particularly from 20 to 30 % by weight, of R-125.

Another particularly preferred refrigerant composition of the invention in terms of its suitability as a high capacity replacement for refrigerant R-22 is one comprising from 5 to 15 % by weight of CO₂, from 5 to 25 % by weight of R-134a, and from 65 to 85 % by weight ofR-32 and R-125 combined. Within these ranges, an especially preferred high capacity refrigerant composition of the invention for replacing refrigerant R-22 is one comprising from 5 to 15 % by weight, more especially about 10 % by weight, of CO₂, from 15 to 25 % by weight, more especially about 20 % by weight, of R-134a and from 65 to 75 % by weight, more especially about 70 % by weight, of a mixture of R-32 and R-125. The weight ratio of R-32 to R-125 in the mixture will typically be in the range of from 6:4 to 4:6, and preferably will be about 1:1.

A particularly preferred refrigerant composition of the invention in terms of its suitability as a high capacity replacement for refrigerant R-502 is one comprising from 1 to 15 % by weight of CO₂, from 10 to 30 % by weight more particularly from 10 to 25 % by weight, of R-134a, from 5 to 20 % by weight more particularly from 5 to 15 % by weight, of R-32 and from 60 to 80 % by weight, more particularly from 60 to 75 % by weight, of R-125.

Another particularly preferred refrigerant composition of the invention in terms of its suitability as a high capacity replacement for refrigerant R-502 is one comprising from 1 to 15 % by weight, more particularly from 1 to 10 % by weight, of CO₂, from 30 to 55 % by weight, more particularly from 30 to 45 % by weight, of R-134a, from 15 to 30 % by weight, more particularly from 15 to 25 % by weight, of R-32 and from 20 to 45 % by weight, more particularly from 30 to 45 % by weight, of R-125.

The refrigerant composition of the invention may also be combined with one or more hydrocarbon compounds in an amount which is sufficient to allow the composition to transport a mineral oil or alkyl benzene type lubricant around a refrigeration circuit and return it to the compressor. In this way, inexpensive lubricants based on mineral oils or alkyl benzenes may be used to lubricate the compressor.

Suitable hydrocarbons for use with the refrigerant composition of the invention are those containing from 2 to 6 carbon atoms, with hydrocarbons containing from 3 to 5 carbon atoms being preferred. Propane and pentane are particularly preferred hydrocarbons, with pentane being especially preferred.

Where a hydrocarbon is combined with the refrigerant composition of the invention, it will preferably be present in an amount of from 1 to 10 % by weight on the total weight of the refrigerant composition.

The refrigerant composition of the invention may also be used in combination with the types of lubricants which have been specially developed for use with hydrofluorocarbon based refrigerants. Such lubricants include those comprising a polyoxyalkylene glycol base oil. Suitable polyoxyalkylene glycols include hydroxyl group initiated polyoxyalkylene glycols, e.g. ethylene and/or propylene oxide oligomers/polymers initiated on mono- or polyhydric alcohols such as methanol, butanol, pentaerythritol and glycerol. Such polyoxyalkylene glycols may also be end-capped with suitable terminal groups such as alkyl, e.g. methyl groups. Another class of lubricants which have been developed for use with hydrofluorocarbon based refrigerants and which may be used in combination with the present refrigerant compositions are those comprising a neopentyl polyol ester base oil derived from the reaction of at least one neopentyl polyol and at least one aliphatic carboxylic acid or an esterifiable derivative thereof. Suitable neopentyl polyols for the formation of the ester base oil include pentaerythritol, polypentaerythritols such as di- and tripentaerythritol, trimethylol alkanes such as trimethylol ethane and trimethylol propane, and neopentyl glycol. The esters may be formed with linear and/or branched aliphatic carboxylic acids, such as linear and/or branched alkanoic acids. Preferred acids are selected from the C₅₋₈, particularly the C₅₋₇, linear alkanoic acids and the C₅₋₁₀, particularly the C₅₋₉, branched alkanoic acids. A minor proportion of an aliphatic polycarboxylic acid, e.g. an aliphatic dicarboxylic acid, may also be used in the synthesis of the ester in order to increase the viscosity thereof. Usually, the amount of the carboxylic acid(s) which is used in the synthesis will be sufficient to esterify all of the hydroxyl groups contained in the polyol, although residual hydroxyl functionality may be acceptable.

The non-azeotropic refrigerant composition of the present invention may be used to provide the desired cooling in heat transfer devices such as air conditioning and low temperature refrigeration systems by a method which involves condensing the refrigerant composition and thereafter evaporating it in a heat exchange relationship with a heat transfer fluid to be cooled. In particular, the refrigerant composition of the invention may be employed as a replacement for refrigerant R-22 in air conditioning applications or as a replacement for refrigerant R-502 in low temperature refrigeration applications.

The present invention is now illustrated but not limited with reference to the following examples.

### Example 1

In this Example the improvement in energy efficiency which can be achieved by making use of the ability of the zeotropic refrigerant composition of the invention to boil/condense over a wide temperature range was examined.

The performance of seven refrigerant compositions of the invention in a refrigeration cycle of the type prevailing in an air conditioning system was evaluated using standard refrigeration cycle analysis techniques in order to assess the suitability thereof as a replacement for R-22. The operating conditions which were used for the analysis were chosen as being typical of those conditions which are found in an air conditioning system, and counter current flow at the heat exchangers was assumed.

In order to illustrate the benefit of the zeotropic refrigerant compositions of the invention in terms of their improved energy efficiency, the inlet and outlet temperatures of the heat transfer fluids at each heat exchanger (evaporator and condenser) were first defined. The temperatures in the evaporator and condenser, assuming that a single fluid refrigerant was used in the cycle, were then chosen and these temperatures together with the inlet and outlet temperatures of the heat transfer fluids referred to above were used to determine a target log mean temperature difference for each heat exchanger. In the cycle analysis itself, the refrigerant inlet and outlet temperatures at both the evaporator and condenser were adjusted until the target log mean temperature difference was achieved for each heat exchanger. When the target log mean temperature difference for each heat exchanger was achieved, the various properties of the refrigerant composition in the cycle were recorded.

The following refrigerant compositions were subjected to the cycle analysis:
(1) A composition comprising 2 % by weight CO₂, 4.9 % by weight R-32 and 93.1 % by weight R-134a.
(2) A composition comprising 5 % by weight CO₂, 4.75 % by weight R-32 and 90.25 % by weight R-134a.
(3) A composition comprising 7 % by weight CO₂, 4.65 % by weight R-32 and 88.35 % by weight R-134a.
(4) A composition comprising 10 % by weight CO₂, 4.5 % by weight R-32 and 85.5 % by weight R-134a.
(5) A composition comprising 15 % by weight CO₂, 4.25 % by weight R-32 and 80.75 % by weight R-134a.
(6) A composition comprising 5 % by weight CO₂, 5 % by weight R-32 and 90 % by weight R-134a.
(7) A composition comprising 5 % by weight CO₂, 10 % by weight R-32 and 85 % by weight R-134a.

The following operating conditions were used in the cycle analysis.

| EVAPORATOR: | |
|---|---|
| Evaporator Temperature: | 10°C |
| Inlet Temperature of Heat Transfer Fluid | 25°C |
| Outlet Temperature of Heat Transfer Fluid | 15°C |
| Log Mean Temperature Difference for Evaporator | 9.1°C |

| CONDENSER: | |
|---|---|
| Condenser Temperature: | 42°C |
| Inlet Temperature of Heat Transfer Fluid | 30°C |
| Outlet Temperature of Heat Transfer Fluid | 40°C |
| Log Mean Temperature Difference for Condenser | 5.58°C |
| | |
| Amount of Superheat: | 15°C |
| Amount of Subcooling: | 5°C |
| Isentropic Compressor Efficiency: | 75 % |
| Cooling Duty: | 1 kW |

The results of analysing the performance of the seven refrigerant compositions in an air conditioning cycle using these operating conditions are given in Table 1.

The performance parameters of the refrigerant compositions which are presented in Table 1 and in the tables appearing hereafter, i.e. condenser pressure, evaporator pressure, discharge temperature, refrigeration capacity (by which is meant the cooling duty achieved per unit swept volume of the compressor), coefficient of performance (COP) (by which is meant the ratio of cooling duty achieved to mechanical energy supplied to the compressor), and the glides in the evaporator and condenser (the temperature range over which the refrigerant composition boils in the evaporator and condenses in the condenser), are all art recognised parameters.

The performance of refrigerant R-22 under the same operating conditions is also shown in Table 1 by way of comparison.

It is apparent from Table 1 that the refrigerant compositions of the invention boiled over a wide temperature range in the evaporator and condensed over a wide temperature range in the condenser, i.e. they exhibited wide glide behaviour in both heat exchangers, and that this property enhanced the energy efficiency of the air conditioning cycle as is evident from the higher values recorded for the coefficient of performance in the case of the refrigerant compositions of the invention. Table 1 also shows that as the CO₂ concentration increases the temperature glides in the evaporator and condenser also increase and that the energy efficiency (coefficient of performance) reaches a maximum for compositions containing around 5 to 7 % by weight CO₂, since such compositions exhibit temperature glides in the evaporator and condenser which closely match the change in temperature experienced by the heat transfer fluid of 10°C at both the evaporator and condenser. It is also apparent from Table 1 that the refrigerant composition of the invention can exhibit a performance in an air conditioning system which, except for the wide glide behaviour and its attendant advantages, is comparable to that of refrigerant R-22.

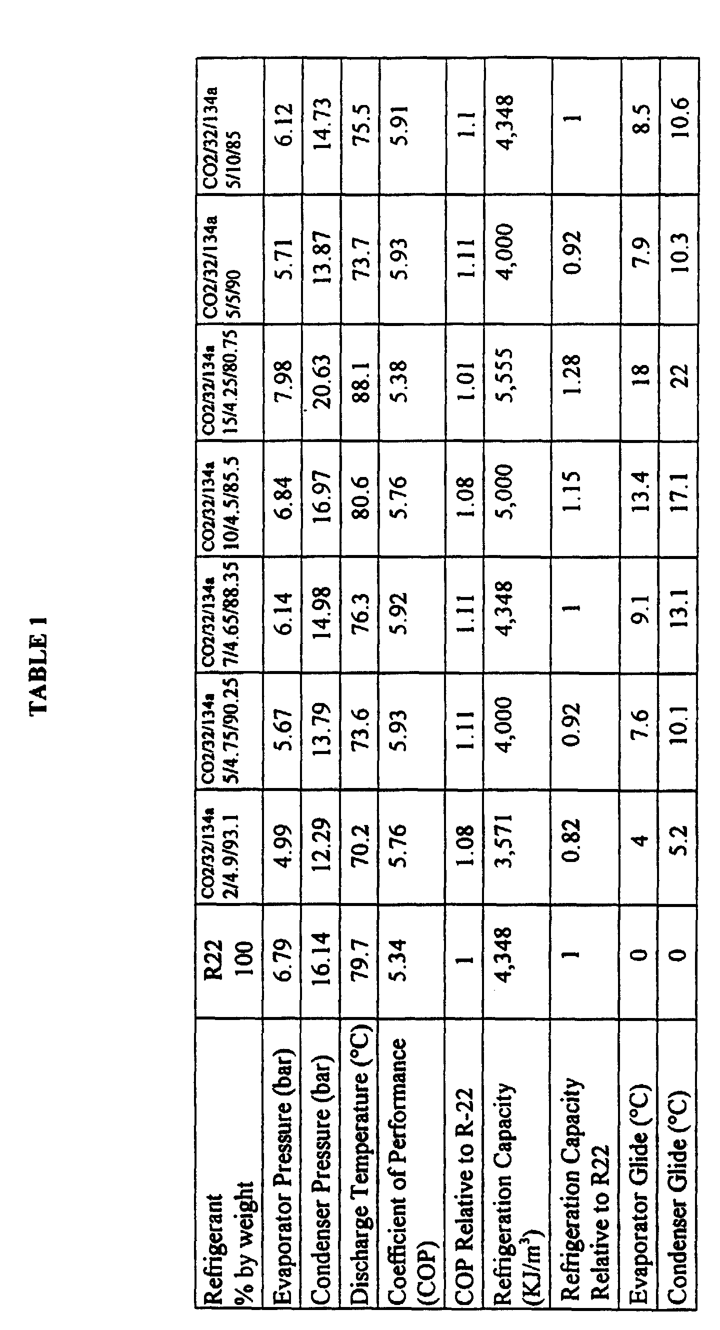

### Example 2

In this Example the improvement in energy efficiency which can be achieved by making use of the ability of the zeotropic refrigerant composition of the invention to boil/condense over a wide temperature range was examined.

The performance of two refrigerant compositions of the invention in a refrigeration cycle of the type prevailing in an air conditioning system was evaluated using exactly the same technique and exactly the same operating conditions as described in Example 1.

The following refrigerant compositions were subjected to the cycle analysis:
(1) A composition comprising 5 % by weight CO₂, 5 % by weight R-32, 5 % by weight R-125 and 85 % by weight R-134a.
(2) A composition comprising 5 % by weight CO₂, 10 % by weight R-125 and 85 % by weight R-134a.
The results of analysing the performance of these two refrigerant compositions in an air conditioning cycle are given in Table 2.

The performance of refrigerant R-22 under the same operating conditions is also shown in Table 2 by way of comparison.

It is apparent from Table 2 that the refrigerant composition of the invention boiled over a wide temperature range in the evaporator and condensed over a wide temperature range in the condenser, i.e. they exhibited wide glide behaviour in both heat exchangers, and that this property enhanced the energy efficiency of the air conditioning cycle as is evident from the higher values recorded for the coefficient of performance in the case of the refrigerant compositions of the invention. It is also apparent from Table 2 that the refrigerant composition of the invention can exhibit a performance in an air conditioning system which, except for the wide glide behaviour and its attendant advantages, is comparable to that of refrigerant R-22.

**TABLE 2**

| Refrigerant % by weight | R22 100 | CO2/32/125/134a 5/5/5/85 | CO2/125/134a 5/10/85 |
|---|---|---|---|
| Evaporator Pressure (bar) | 6.79 | 5.9 | 5.69 |
| Condenser Pressure (bar) | 16.14 | 14.28 | 13.85 |
| Discharge Temperature (°C) | 79.7 | 73.5 | 71.7 |
| Coefficient of Performance (COP) | 5.34 | 5.9 | 5.88 |
| COP Relative to R-22 | 1 | 1.1 | 1.1 |
| Refrigeration Capacity (KJ/m³) | 4,348 | 4,167 | 4,000 |
| Refrigeration Capacity Relative to R22 | 1 | 0.96 | 0.92 |
| Evaporator Glide (°C) | 0 | 8.1 | 7.3 |
| Condenser Glide (°C) | 0 | 10.4 | 10.4 |

### Example 3

In this Example the use of the refrigerant composition of the invention as a high capacity replacement for refrigerant R-22 in air conditioning applications was examined.

The performance of three refrigerant compositions of the invention in a refrigeration cycle of the type prevailing in an air conditioning system was evaluated using exactly the same technique and exactly the same operating conditions as described in Example 1.

The following refrigerant compositions were subjected to the cycle analysis:
(1) A composition comprising 2 % by weight CO₂, 22.5 % by weight R-32, 24.5% by weight R-125 and 51 % by weight R-134a.
(2) A composition comprising 5 % by weight CO₂, 22 % by weight R-32, 24 % by weight R-125 and 49 % by weight R-134a.
(3) A composition comprising 10 % by weight CO₂, 21 % by weight R-32, 22 % by weight R-125 and 47 % by weight R-134a.
The results of analysing the performance of these three refrigerant compositions in an air conditioning cycle are given in Table 3.

The performance of refrigerant R-22 under the same operating conditions is also shown in Table 3 by way of comparison.

It is apparent from Table 3 that all the refrigerant compositions of the invention exhibited high refrigeration capacities in comparison to refrigerant R-22 and that the refrigeration capacity increased as the CO₂ content in the composition increased. It is also apparent from Table 3 that the refrigerant compositions tested exhibited a performance in an air conditioning cycle which could make them an acceptable replacement for refrigerant R-22.

**TABLE 3**

| Refrigerant % by weight | R22 100 | CO2/32/123/134a 2/22.5/24.5/51 | CO2/32/125/134a 5/22/24/49 | CO2/32/125/134a 10/21/22/47 |
|---|---|---|---|---|
| Evaporator Pressure (bar) | 6.79 | 7.56 | 8.28 | 9.43 |
| Condenser Pressure (bar) | 16.14 | 17.73 | 19.29 | 22.09 |
| Discharge Temperature (°C) | 79.7 | 75.7 | 78.2 | 82.8 |
| Coefficient of Performance (COP) | 5.34 | 5.63 | 5.66 | 5.58 |
| COP Relative to R-22 | 1 | 1.06 | 1.06 | 1.05 |
| Refrigeration Capacity (KJ/m³) | 4,348 | 5,000 | 5,555 | 6,250 |
| Refrigeration Capacity Relative to R22 | 1 | 1.15 | 1.28 | 1.44 |
| Evaporator Glide (°C) | 0 | 6.5 | 8.6 | 12.1 |
| Condenser Glide (°C) | 0 | 7.9 | 9.6 | 13.5 |

### Example 4

In this Example the use of the refrigerant composition of the invention as a high capacity replacement for refrigerant R-502 in low temperature refrigeration applications was examined.

The performance of six refrigerant compositions of the invention in a low temperature refrigeration cycle was investigated using standard refrigeration cycle analysis techniques in order to assess the suitability thereof as a replacement for R-502. The following refrigerant compositions were subjected to the cycle analysis:
(1) A composition comprising 2 % by weight CO₂, 19.6 % by weight R-32, 39.2 % by weight R-125 and 39.2 % by weight R-134a.
(2) A composition comprising 5 % by weight CO₂, 19 % by weight R-32, 38 % by weight R-125 and 38 % by weight R-134a.
(3) A composition comprising 10 % by weight CO₂, 18 % by weight R-32, 36 % by weight R-125 and 36 % by weight R-134a.
(4) A composition comprising 2 % by weight CO₂, 9.8 % by weight R-32, 68.6 % by weight R-125 and 19.6 % by weight R-134a.
(5) A composition comprising 5 % by weight CO₂, 9.5 % by weight R-32, 66.5 % by weight R-125 and 19 % by weight R-134a.
(6) A composition comprising 10 % by weight CO₂, 9 % by weight R-32, 63 % by weight R-125 and 18 % by weight R-134a.

The following operating conditions were used in the cycle analysis.

| | |
|---|---|
| Mean Evaporator Temperature | -40°C |
| Mean Condenser Temperature | 40°C |
| Amount of Superheat | 10°C |
| Amount of Subcooling | 5°C |
| Isentropic Compressor Efficiency | 75 % |
| Cooling Duty | 1 kW |

The results of analysing the performance of the six refrigerant compositions in a low temperature refrigeration cycle using these operating conditions are given in Table 4.

The performance of refrigerant R-502 under the same operating conditions is also shown in Table 4 by way of comparison.

It is apparent from Table 4 that the refrigerant compositions of the invention exhibited as good as or better refrigeration capacities than refrigerant R-502 and that the refrigeration capacity increased as the CO₂ content in the composition increased. It is also apparent from Table 4 that the refrigerant compositions tested exhibited a performance in a low temperature refrigeration cycle which could make them an acceptable replacement for refrigerant R-502.

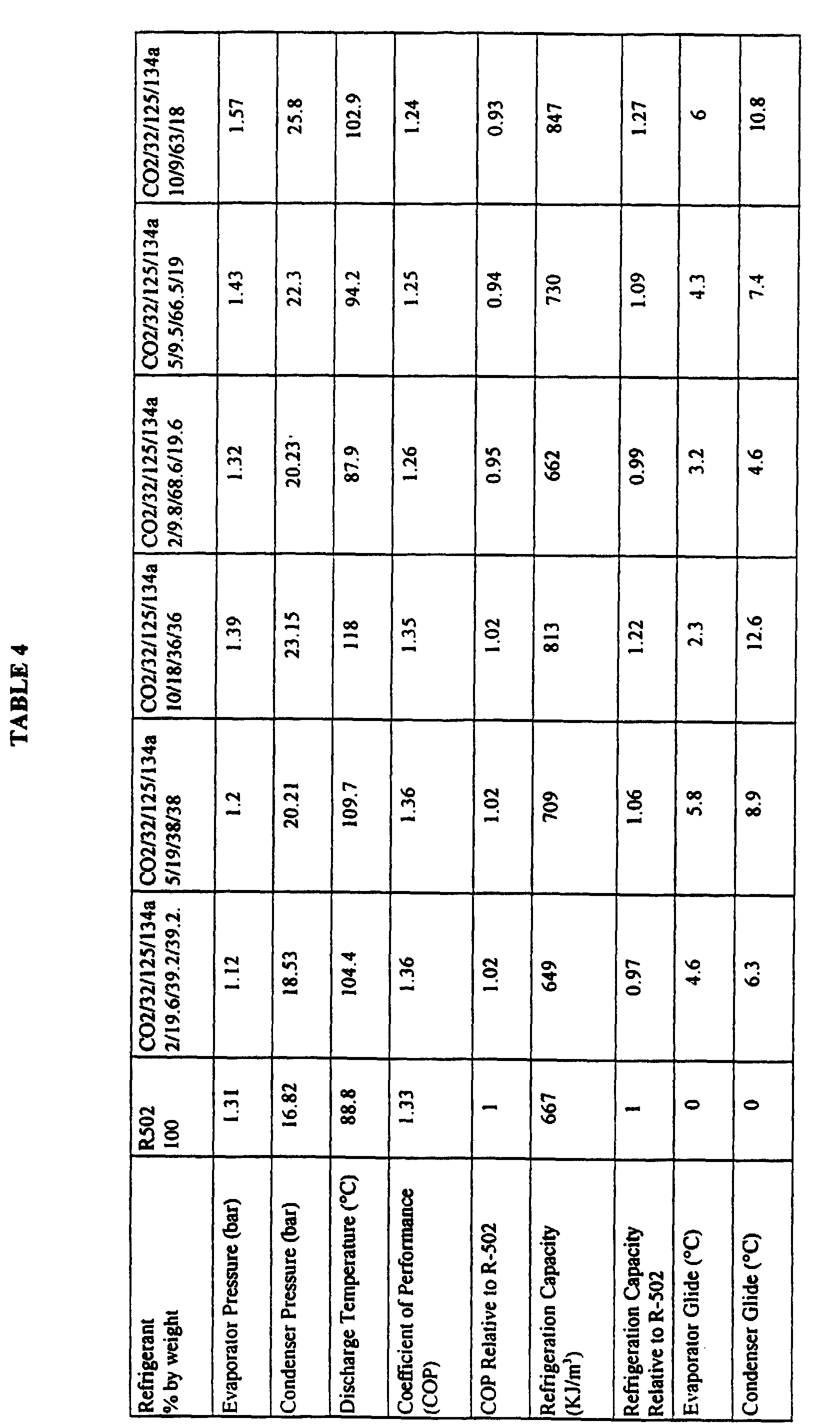

### Example 5

In this Example the use of the refrigerant composition of the invention as a replacement for refrigerant R-502 in low temperature refrigeration applications was examined.

The performance of two refrigerant compositions of the invention in a low temperature refrigeration cycle was investigated using standard refrigeration cycle analysis techniques in order to assess the suitability thereof as a replacement for R-502. The following refrigerant compositions were subjected to the cycle analysis:
(1) A composition comprising 10 % by weight CO₂, 40 % by weight R-125 and 50 % by weight R-134a.
(2) A composition comprising 10 % by weight CO₂, 50 % by weight R-125 and 40 % by weight R-134a.

The following operating conditions were used in the cycle analysis. The condenser and evaporator temperatures were defined as the mid-point of the respective inlet and outlet temperatures.

| | |
|---|---|
| Evaporator Temperature | -40°C |
| Condenser Temperature | 54°C |
| Superheat | 58°C |
| Subcooling | 5°C |
| Isentropic Compressor Efficiency | 80 % |

The results of analysing the performance of the two refrigerant compositions in a low temperature refrigeration cycle using these operating conditions are given in Table 5.

The performance of refrigerant R-502 under the same operating conditions is also shown in Table 5 by way of comparison.

It is apparent from Table 5 that the refrigerant compositions tested exhibited a performance in a low temperature refrigeration cycle which is comparable to that of refrigerant R-502. The composition comprising 10 % by weight CO₂, 50 % by weight R-134a, and 40 % by weight R-125 is a particularly good match for R-502. It is also apparent from Table 5 that the refrigerant compositions tested exhibited wide glide behaviour in both the evaporator and condenser.

**TABLE 5**

| Refrigerant % by weight | R-502 | CO₂/R-125/R-134a | |
|---|---|---|---|
| | 100 | 10/40/50 | 10/50/40 |
| Condenser Pressure (bar) | 1.31 | 1.03 | 1.14 |
| Evaporator Pressure (Bar) | 23.01 | 25.74 | 27.01 |
| Coefficient of Performance (COP) | 0.81 | 0.88 | 0.85 |
| Discharge Temperature (°C) | 155 | 164 | 160 |
| Evaporator Glide (°C) | 0 | 5.2 | 5 |
| Condenser Glide (°C) | 0 | 10.5 | 9.2 |
| Refrigeration Capacity (KJ/m³) | 433 | 417 | 437 |

### Example 6

In this Example the use of the refrigerant composition of the invention as a high capacity replacement for refrigerant R-22 in air conditioning applications was examined.

The performance of six refrigerant compositions of the invention in a refrigeration cycle of the type prevailing in an air conditioning system was evaluated using exactly the same technique and exactly the same operating conditions as described in Example 1.

The following refrigerant compositions were subjected to the cycle analysis:
(1) A composition comprising 10 % by weight CO₂, 35 % by weight R-32, 35 % by weight R-125 and 20 % by weight R-134a.
(2) A composition comprising 5 % by weight CO₂, 37.5 % by weight R-32, 37.5% by weight R-125 and 20 % by weight R-134a.
(3) A composition comprising 10 % by weight CO₂, 28 % by weight R-32, 42 % by weight R-125 and 20 % by weight R-134a.
(4) A composition comprising 10 % by weight CO₂, 42 % by weight R-32, 28 % by weight R-125 and 20 % by weight R-134a.
(5) A composition comprising 10 % by weight CO₂, 40 % by weight R-32, 40 % by weight R-125 and 10 % by weight R-134a.
(6) A composition comprising 10 % by weight CO₂, 30 % by weight R-32, 30 % by weight R-125 and 30 % by weight R-134a.
The results of analysing the performance of these six refrigerant compositions in an air conditioning cycle are given in Table 6.

The performance of refrigerant R-22 and the performance of a binary blend which is a known replacement for R-22 comprising 50 % by weight R-32 and 50 % by weight R-125 under the same operating conditions is also shown in Table 6 by way of comparison.

It is apparent from Table 6 that all the refrigerant compositions of the invention exhibited high refrigeration capacities in comparison to refrigerant R-22 and that the refrigeration capacity increased as the CO₂ content in the composition increased. It is also apparent from Table 6 that the refrigerant compositions of the invention exhibited fairly wide temperature glides in both the evaporator and condenser and that as a result the coefficient of performance of the compositions matched that of R-22 and considerably exceeded that of the binary R-32/R-125 blend which is known as a replacement for R-22.

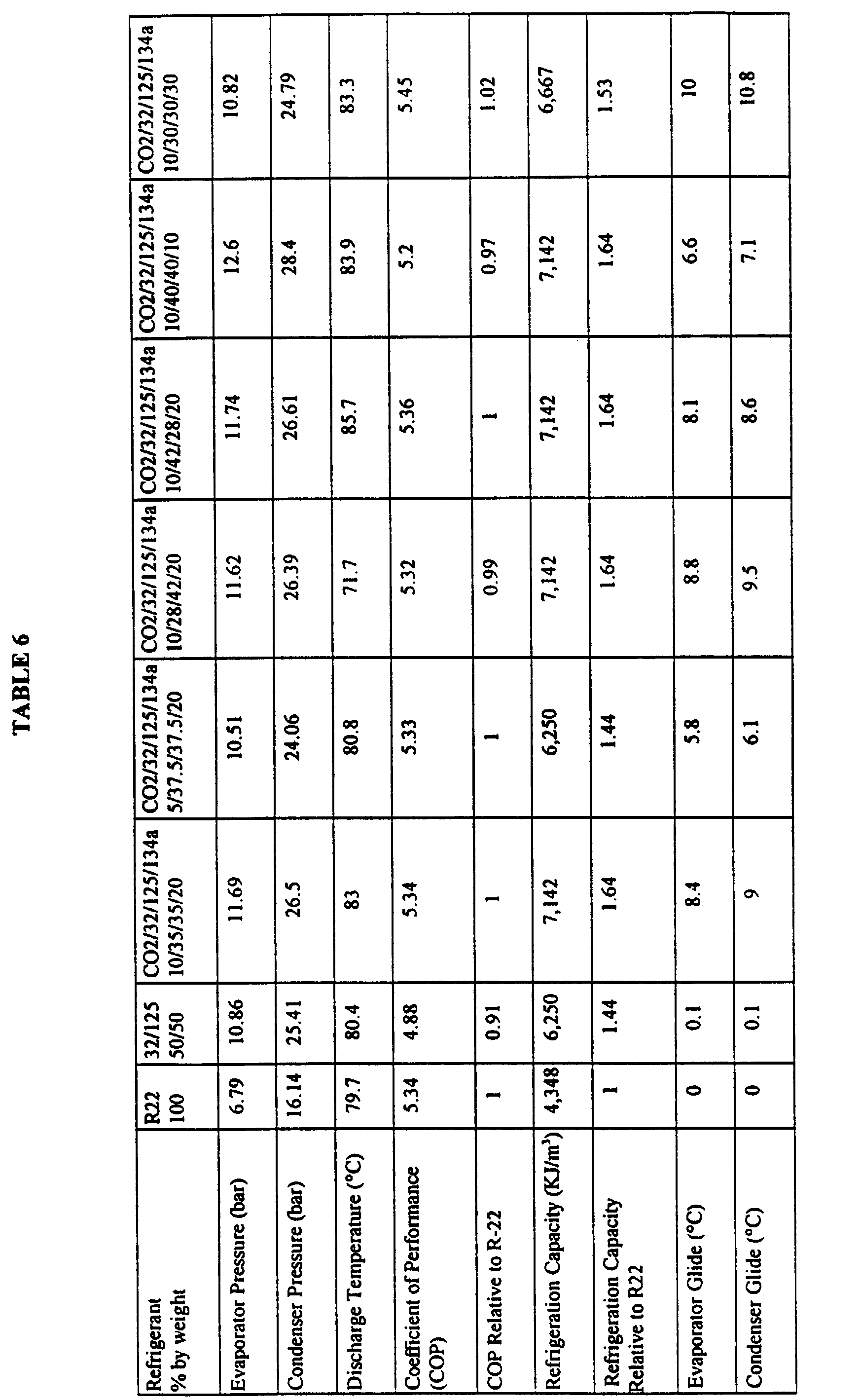

## Claims

1. A non-azeotropic refrigerant composition comprising:
(A) carbon dioxide;
(B) at least one hydrofluorocarbon selected from the group consisting of 1,1,1,2-tetrafluoroethane and 1,1,2,2-tetrafluoroethane; and
(C) at least one hydrofluorocarbon selected from the group consisting of difluoromethane, 1,1,1-trifluoroethane and pentafluoroethane.

2. A non-azeotropic refrigerant composition as claimed in claim 1 wherein component (B) is 1,1,1,2-tetrafluoroethane.

3. A non-azeotropic refrigerant composition as claimed in claim 1 or claim 2 wherein component (C) is difluoromethane, pentafluoroethane or a mixture of difluoromethane and pentafluoroethane.

4. A non-azeotropic refrigerant composition as claimed in any one of claims 1 to 3 which comprises from 2 to 25 % by weight of carbon dioxide, from 15 to 96 % by weight of component (B) and from 2 to 60 % by weight of component (C).

5. A non-azeotropic refrigerant composition as claimed in claim 4 which comprises from 2 to 15 % by weight of carbon dioxide, from 30 to 96 % by weight of component (B) and from 2 to 55 % by weight of component (C).

6. A non-azeotropic refrigerant composition as claimed in claim 2 which comprises from 2 to 10 % by weight of carbon dioxide, from 50 to 96 % by weight of 1,1,1,2-tetrafluoroethane and from 2 to 40 % by weight of component (C).

7. A non-azeotropic refrigerant composition as claimed in claim 6 which comprises from 5 to 10 % by weight of carbon dioxide, from 60 to 93 % by weight of 1,1,1,2-tetrafluoroethane and from 2 to 30 % by weight of component (C).

8. A non-azeotropic refrigerant composition as claimed in claim 7 which comprises from 5 to 10 % by weight of carbon dioxide, from 75 to 93 % by weight of 1,1,1,2-tetrafluoroethane and from 2 to 15 % by weight of component (C).

9. A non-azeotropic refrigerant composition as claimed in claim 2 which comprises from 5 to 15 % by weight of carbon dioxide, from 35 to 55 % by weight of 1,1,1,2-tetrafluoroethane, and from 35 to 55 % by weight of pentafluoroethane.

10. A non-azeotropic refrigerant composition as claimed in claim 9 which comprises about 10 % by weight of carbon dioxide, from 45 to 55 % by weight of 1,1,1,2-tetrafluoroethane, and from 35 to 45 % by weight of pentafluoroethane.

11. A non-azeotropic refrigerant composition as claimed in claim 10 which comprises about 10 % by weight of carbon dioxide, about 50 % by weight of 1,1,1,2-tetrafluoroethane and about 40 % by weight of pentafluoroethane.

12. A non-azeotropic refrigerant composition as claimed in claim 1 which comprises from 1 to 20 % by weight of carbon dioxide, from 5 to 60 % by weight of component (B) and from 30 to 90 % by weight of component (C).

13. A non-azeotropic refrigerant composition as claimed in claim 12 wherein component (B) is 1,1,1,2-tetrafluoroethane.

14. A non-azeotropic refrigerant composition as claimed in claim 13 wherein component (C) is a mixture of difluoromethane and pentafluoroethane.

15. A non-azeotropic refrigerant composition as claimed in claim 14 which comprises from 1 to 15 % by weight of carbon dioxide, from 30 to 55 % by weight of 1,1,1,2-tetrafluoroethane, from 15 to 30 % by weight of difluoromethane and from 20 to 45 % by weight of pentafluoroethane.

16. A non-azeotropic refrigerant composition as claimed in claim 15 which comprises from 1 to 10 % by weight of carbon dioxide, from 45 to 55 % by weight of 1,1,1,2-tetrafluoroethane, from 18 to 30 % by weight of difluoromethane and from 20 to 30 % by weight of pentafluoroethane.

17. A non-azeotropic refrigerant composition as claimed in claim 14 which comprises from 5 to 15 % by weight of carbon dioxide, from 5 to 25 % by weight of 1,1,1,2-tetrafluoroethane and from 65 to 85 % by weight of a mixture of difluoromethane and pentafluoroethane.

18. A non-azeotropic refrigerant composition as claimed in claim 17 which comprises from 5 to 15 % by weight of carbon dioxide, from 15 to 25 % by weight of 1,1,1,2-tetrafluoroethane and from 65 to 75 % by weight of a mixture of difluoromethane and pentafluoroethane.

19. A non-azeotropic refrigerant composition as claimed in claim 18 which comprises about 10 % by weight of carbon dioxide, about 20 % by weight of 1,1,1,2-tetrafluoroethane and about 70 % by weight of a mixture of difluoromethane and pentafluoroethane.

20. A non-azeotropic refrigerant composition as claimed in any one of claims 17 to 19 wherein the weight ratio of difluoromethane to pentafluoroethane in the mixture is in the range of from 6:4 to 4:6.

21. A non-azeotropic refrigerant composition as claimed in claim 20 wherein the weight ratio of difluoromethane to pentafluoroethane in the mixture is about 1:1.

22. A non-azeotropic refrigerant composition as claimed in claim 14 which comprises from 1 to 15 % by weight of carbon dioxide, from 10 to 30 % by weight of 1,1,1,2-tetrafluoroethane, from 5 to 20 % by weight of difluoromethane and from 60 to 80 % by weight of pentafluoroethane.

23. A non-azeotropic refrigerant composition as claimed in claim 22 which comprises from 1 to 15 % by weight of carbon dioxide, from 10 to 25 % by weight of 1,1,1,2-tetrafluoroethane, from 5 to 15 % by weight of difluoromethane and from 60 to 75 % by weight of pentafluoroethane.

24. A non-azeotropic refrigerant composition as claimed in claim 14 which comprises from 1 to 15 % by weight of carbon dioxide, from 30 to 55 % by weight of 1,1,1,2-tetrafluoroethane, from 15 to 30 % by weight of difluoromethane and from 20 to 45 % by weight of pentafluoroethane.

25. A non-azeotropic refrigerant composition as claimed in claim 24 which comprises from 1 to 10 % by weight of carbon dioxide, from 30 to 45 % by weight of 1,1,1,2-tetrafluoroethane, from 15 to 25 % by weight of difluoromethane and from 30 to 45 % by weight of pentafluoroethane.

26. The use in a refrigeration or air conditioning system of a non-azeotropic refrigerant composition as claimed in any one of claims 1 to 25.

27. A method for providing cooling which comprises condensing a non-azeotropic refrigerant composition as claimed in any one of claims 1 to 25 and thereafter evaporating it in a heat exchange relationship with a fluid to be cooled.

## Patentansprüche

1. Nicht-azeotrope Kühlzusammensetzung, die enthält:
(A) Kohlendioxid,
(B) mindestens einen unter 1,1,1,2-Tetrafluorethan und 1,1,2,2-Tetrafluorethan ausgewählten Fluorkohlenwasserstoff und
(C) mindestens einen unter Difluormethan, 1,1,1-Trifluorethan und Pentafluorethan ausgewählten Fluorkohlenwasserstoff.

2. Nicht-azeotrope Kühlzusammensetzung nach Anspruch 1, wobei Bestandteil (B) 1,1,1,2-Tetrafluorethan ist.

3. Nicht-azeotrope Kühlzusammensetzung nach Anspruch 1 oder 2, wobei Bestandteil (C) Difluormethan, Pentafluorethan oder ein Gemisch aus Difluormethan und Pentafluorethan ist.

4. Nicht-azeotrope Kühlzusammensetzung nach einem der Ansprüche 1 bis 3, die 2 bis 25 Gew.-% Kohlendioxid, 15 bis 96 Gew.-% Bestandteil (B) und 2 bis 60 Gew.-% Bestandteil (C) enthält.

5. Nicht-azeotrope Kühlzusammensetzung nach Anspruch 4, die 2 bis 15 Gew.-% Kohlendioxid, 30 bis 96 Gew.-% Bestandteil (B) und 2 bis 55 Gew.-% Bestandteil (C) enthält.

6. Nicht-azeotrope Kühlzusammensetzung nach Anspruch 2, die 2 bis 10 Gew.-% Kohlendioxid, 50 bis 96 Gew.-% 1,1,1,2-Tetrafluorethan und 2 bis 40 Gew.-% Bestandteil (C) enthält.

7. Nicht-azeotrope Kühlzusammensetzung nach Anspruch 6, die 5 bis 10 Gew.-% Kohlendioxid, 60 bis 93 Gew.-% 1,1,1,2-Tetrafluorethan und von 2 bis 30 Gew.-% Bestandteil (C) enthält.

8. Nicht-azeotrope Kühlzusammensetzung nach Anspruch 7, die 5 bis 10 Gew.-% Kohlendioxid, 75 bis 93 Gew.-% 1,1,1,2-Tetrafluorethan und 2 bis 15 Gew.-% Bestandteil (C) enthält.

9. Nicht-azeotrope Kühlzusammensetzung nach Anspruch 2, die 5 bis 15 Gew.-% Kohlendioxid, 35 bis 55 Gew.-% 1,1,1,2-Tetrafluorethan und 35 bis 55 Gew.-% Pentafluorethan enthält.

10. Nicht-azeotrope Kühlzusammensetzung nach Anspruch 9, die etwa 10 Gew.-% Kohlendioxid, 45 bis 55 Gew.-% 1,1,1,2-Tetrafluorethan und 35 bis 45 Gew.-% Pentafluorethan enthält.

11. Nicht-azeotrope Kühlzusammensetzung nach Anspruch 10, die etwa 10 Gew.-% Kohlendioxid, etwa 50 Gew.-% 1,1,1,2-Tetrafluorethan und etwa 40 Gew.-% Pentafluorethan enthält.

12. Nicht-azeotrope Kühlzusammensetzung nach Anspruch 1, die 1 bis 20 Gew.-% Kohlendioxid, 5 bis 60 Gew.-% Bestandteil (B) und 30 bis 90 Gew.-% Bestandteil (C) enthält.

13. Nicht-azeotrope Kühlzusammensetzung nach Anspruch 12, wobei Bestandteil (B) 1,1,1,2-Tetrafluorethan ist.

14. Nicht-azeotrope Kühlzusammensetzung nach Anspruch 13, wobei Bestandteil (C) ein Gemisch aus Difluormethan und Pentafluorethan ist.

15. Nicht-azeotrope Kühlzusammensetzung nach Anspruch 14, die 1 bis 15 Gew.-% Kohlendioxid, 30 bis 55 Gew.-% 1,1,1,2-Tetrafluorethan, und 15 bis 30 Gew.-% Difluormethan und 20 bis 45 Gew.-% Pentafluorethan enthält.

16. Nicht-azeotrope Kühlzusammensetzung nach Anspruch 15, die 1 bis 10 Gew.-% Kohlendioxid, 45 bis 55 Gew.-% 1,1,1,2-Tetrafluorethan, 18 bis 30 Gew.-% Difluormethan und 20 bis 30 Gew.-% Pentafluorethan enthält.

17. Nicht-azeotrope Kühlzusammensetzung nach Anspruch 14, die 5 bis 15 Gew.-% Kohlendioxid, 5 bis 25 Gew.-% 1,1,1,2-Tetrafluorethan und 65 bis 85 Gew.-% eines Gemisches aus Difluormethan und Pentafluorethan enthält.

18. Nicht-azeotrope Kühlzusammensetzung nach Anspruch 17, die 5 bis 15 Gew.-% Kohlendioxid, 15 bis 25 Gew.-% 1,1,1,2-Tetrafluorethan und 65 bis 75 Gew.-% eines Gemisches aus Difluormethan und Pentafluorethan enthält.

19. Nicht-azeotrope Kühlzusammensetzung nach Anspruch 18, die etwa 10 Gew.-% Kohlendioxid, etwa 20 Gew.-% 1,1,1,2-Tetrafluorethan und etwa 70 Gew.-% eines Gemisches aus Difluormethan und Pentafluorethan enthält.

20. Nicht-azeotrope Kühlzusammensetzung nach einem der Ansprüche 17 bis 19, wobei das Gewichtsverhältnis Difluormethan zu Pentafluorethan in dem Gemisch im Bereich von 6:4 bis 4:6 liegt.

21. Nicht-azeotrope Kühlzusammensetzung nach Anspruch 20, wobei das Gewichtsverhältnis Difluormethan zu Pentafluorethan in dem Gemisch etwa 1:1 beträgt.

22. Nicht-azeotrope Kühlzusammensetzung nach Anspruch 14, die 1 bis 15 Gew.-% Kohlendioxid, 10 bis 30 Gew.-% 1,1,1,2-Tetrafluorethan, 5 bis 20 Gew.-% Difluormethan und 60 bis 80 Gew.-% Pentafluorethan enthält.

23. Nicht-azeotrope Kühlzusammensetzung nach Anspruch 22, die 1 bis 15 Gew.-% Kohlendioxid, 10 bis 25 Gew.-% 1,1,1,2-Tetrafluorethan und 5 bis 15 Gew.-% Difluormethan und 60 bis 75 Gew.-% Pentafluorethan enthält.

24. Nicht-azeotrope Kühlzusammensetzung nach Anspruch 14, die 1 bis 15 Gew.-% Kohlendioxid, 30 bis 55 Gew.-% 1,1,1,2-Tetrafluorethan, 15 bis 30 Gew.-% Difluormethan und 20 bis 45 Gew.-% Pentafluorethan enthält.

25. Nicht-azeotrope Kühlzusammensetzung nach Anspruch 24, die 1 bis 10 Gew.-% Kohlendioxid, 30 bis 45 Gew.-% 1,1,1,2-Tetrafluorethan, 15 bis 25 Gew.-% Difluormethan und 30 bis 45 Gew.-% Pentafluorethan enthält.

26. Verwendung einer nicht-azeotropen Kühlzusammensetzung nach einem der Ansprüche 1 bis 25 in einem Kühl- oder Klimatisiersystem.

27. Verfahren zum Kühlen, bei dem eine nicht-azeotrope Kühlzusammensetzung nach einem der Ansprüche 1 bis 25 kondensiert und im Anschluß daran in Wärmeaustauschbeziehung mit einem zu kühlenden Fluid verdampft wird.

## Revendications

1. Composition réfrigérante non azéotropique, comprenant :
(A) du dioxyde de carbone ;
(B) au moins un hydrocarbure fluoré choisi dans le groupe consistant en le 1,1,1,2-tétrafluoréthane et le 1,1,2,2-tétrafluoréthane ; et
(C) au moins un hydrocarbure fluoré choisi dans le groupe consistant en le difluorométhane, le 1,1,1-trifluoréthane et le pentafluoréthane.

2. Composition réfrigérante non azéotropique suivant la revendication 1, dans laquelle le composant (B) est le 1,1,1,2-tétrafluoréthane.

3. Composition réfrigérante non azéotropique suivant la revendication 1 ou la revendication 2, dans laquelle le composant (C) est le difluorométhane, le pentafluoréthane ou un mélange de difluorométhane et de pentafluoréthane.

4. Composition réfrigérante non azéotropique suivant l'une quelconque des revendications 1 à 3, qui comprend 2 à 25 % en poids de dioxyde de carbone, 15 à 96 % en poids de composant (B) et 2 à 60 % en poids du composant (C).

5. Composition réfrigérante non azéotropique suivant la revendication 4, qui comprend 2 à 15 % en poids de dioxyde de carbone, 30 à 96 % en poids de composant (B) et 2 à 55 % en poids de composant (C).

6. Composition réfrigérante non azéotropique suivant la revendication 2, qui comprend 2 à 10 % en poids de dioxyde de carbone, 50 à 96 % en poids de 1,1,1,2-tétrafluoréthane et 2 à 40 % en poids de composant (C).

7. Composition réfrigérante non azéotropique suivant la revendication 6, qui comprend 5 à 10 % en poids de dioxyde de carbone, 60 à 93 % en poids de 1,1,1,2-tétrafluoréthane et 2 à 30 % en poids de composant (C).

8. Composition réfrigérante non azéotropique suivant la revendication 7, qui comprend 5 à 10 % en poids de dioxyde de carbone, 75 à 93 % en poids de 1,1,1,2-tétrafluoréthane et 2 à 15 % en poids de composant (C).

9. Composition réfrigérante non azéotropique suivant la revendication 2, qui comprend 5 à 15 % en poids de dioxyde de carbone, 35 à 55 % en poids de 1,1,1,2-tétrafluoréthane et 35 à 55 % en poids de pentafluoréthane.

10. Composition réfrigérante non azéotropique suivant la revendication 9, qui comprend environ 10 % en poids de dioxyde de carbone, 45 à 55 % en poids de 1,1,1,2-tétrafluoréthane et 35 à 45 % en poids de pentafluoréthane.

11. Composition réfrigérante non azéotropique suivant la revendication 10, qui comprend environ 10 % en poids de dioxyde de carbone, environ 50 % en poids de 1,1,1,2-tétrafluoréthane et environ 40 % en poids de pentafluoréthane.

12. Composition réfrigérante non azéotropique suivant la revendication 1, qui comprend 1 à 20 % en poids de dioxyde de carbone, 5 à 60 % en poids de composant (B) et 30 à 90 % en poids de composant (C).

13. Composition réfrigérante non azéotropique suivant la revendication 12, dans laquelle le composant (B) est le 1,1,1,2-tétrafluoréthane.

14. Composition réfrigérante non azéotropique suivant la revendication 13, dans laquelle le composant (C) est un mélange de difluorométhane et de pentafluoréthane.

15. Composition réfrigérante non azéotropique suivant la revendication 14, qui comprend 1 à 15 % en poids de dioxyde de carbone, 30 à 55 % en poids de 1,1,1,2-tétrafluoréthane, 15 à 30 % en poids de difluorométhane et 20 à 45 % en poids de pentafluoréthane.

16. Composition réfrigérante non azéotropique suivant la revendication 15, qui comprend 1 à 10 % en poids de dioxyde de carbone, 45 à 55 % en poids de 1,1,1,2-tétrafluoréthane, 18 à 30 % en poids de difluorométhane et 20 à 30 % en poids de pentafluoréthane.

17. Composition réfrigérante non azéotropique suivant la revendication 14, qui comprend 5 à 15 % en poids de dioxyde de carbone, 5 à 25 % en poids de 1,1,1,2-tétrafluoréthane et 65 à 85 % en poids d'un mélange de difluorométhane et de pentafluoréthane.

18. Composition réfrigérante non azéotropique suivant la revendication 17, qui comprend 5 à 15 % en poids de dioxyde de carbone, 15 à 25 % en poids de 1,1,1,2-tétrafluoréthane et 65 à 75 % en poids d'un mélange de difluorométhane et de pentafluoréthane.

19. Composition réfrigérante non azéotropique suivant la revendication 18, qui comprend environ 10 % en poids de dioxyde de carbone, environ 20 % en poids de 1,1,1,2-tétrafluoréthane et environ 70 % en poids d'un mélange de difluorométhane et de pentafluoréthane.

20. Composition réfrigérante non azéotropique suivant l'une quelconque des revendications 17 à 19, dans laquelle le rapport en poids de difluorométhane au pentafluoréthane dans le mélange se situe dans la plage de 6:4 à 4:6.

21. Composition réfrigérante non azéotropique suivant la revendication 20, dans laquelle le rapport en poids du difluorométhane au pentafluoréthane dans le mélange est d'environ 1:1.

22. Composition réfrigérante non azéotropique suivant la revendication 14, qui comprend 1 à 15 % en poids de dioxyde de carbone, 10 à 30 % en poids de 1,1,1,2-tétrafluoréthane, 5 à 20 % en poids de difluorométhane et 60 à 80 % en poids de pentafluoréthane.

23. Composition réfrigérante non azéotropique suivant la revendication 22, qui comprend 1 à 15 % en poids de dioxyde de carbone, 10 à 25 % en poids de 1,1,1,2-tétrafluoréthane, 5 à 15 % en poids de difluorométhane et 60 à 75 % en poids de pentafluoréthane.

24. Composition réfrigérante non azéotropique suivant la revendication 14, qui comprend 1 à 15 % en poids de dioxyde de carbone, 30 à 55 % en poids de 1,1,1,2-tétrafluoréthane, 15 à 30 % en poids de difluorométhane et 20 à 45 % en poids de pentafluoréthane.

25. Composition réfrigérante non azéotropique suivant la revendication 24, qui comprend 1 à 10 % en poids de dioxyde de carbone, 30 à 45 % en poids de 1,1,1,2-tétrafluoréthane, 15 à 25 % en poids de difluorométhane et 30 à 45 % en poids de pentafluoréthane.

26. Utilisation, dans un circuit de réfrigération ou de conditionnement d'air, d'une composition réfrigérante non azéotropique suivant l'une quelconque des revendications 1 à 25.

27. Procédé pour produire un refroidissement, qui comprend la condensation d'une composition réfrigérante non azéotropique suivant l'une quelconque des revendications 1 à 25 puis son évaporation en relation d'échange de chaleur avec un fluide pouvant être refroidi.
